# EUROPEAN PATENT APPLICATION

(11) **EP 4 620 862 A1**
(43) Date of publication of application: **24.09.2025**
(21) Application number: 23890818.0
(22) Date of filing: 15.11.2023
(51) Int. Cl.: B65D 90/08, B65D 88/52

(54) **HINGE DEVICE AND FOLDABLE CONTAINER HAVING SAME**

(30) Priority: 16.11.2022 CN 202211435014
(71) Applicant: Guangdong Xinhui Cimc Special Transportation Equipment Co. Ltd., Jiangmen, Guangdong 529144 (CN)
(72) Inventor: WU, Guoquan, Jiangmen, Guangdong 529144 (CN); REN, Zhenyuan, Jiangmen, Guangdong 529144 (CN); WU, Qibin, Jiangmen, Guangdong 529144 (CN); WU, Ming, Jiangmen, Guangdong 529144 (CN)
(74) Representative: Gleiss Große Schrell und Partner mbB
(86) International application number: PCT/CN2023/131819
(87) International publication number: WO 2024/104387

(57) **Abstract**

A hinge device and a foldable container are provided. The hinge device comprises a fixed hinge, a movable hinge, a flipping pedal and a locking assembly pivotally connected to the fixed hinge between locking and releasing positions. The locking assembly comprises a bracket and a locking block movably clamped therein. The locking block in the locking position is pushed by the movable hinge when it pivots from a horizontal position to a vertical position relative to the fixed hinge, so that the movable hinge in the vertical position is at least partially located below the locking block in the locking position. The movement of the movable hinge is blocked by the locking block when the movable hinge pivots from the vertical position to the horizontal position. The locking assembly can be driven to pivot from the locking position to the releasing position by operating the flipping pedal.

## Description

### BACKGROUND

The present disclosure generally relates to the technical field of containers, and in particular to a hinge device and a foldable container having same.

In current foldable containers, a foldable end frame is hinged to a bottom frame by a hinge device. After the end frame is erected, a bolt of the hinge device needs to be manually operated to lock the end frame. The hinge device generally includes a movable hinge fixedly connected to the lower end of the end frame, and a fixed hinge fixedly connected to both sides of the end portion of the bottom frame. The movable hinge is hinged to the fixed hinge by a pin shaft such that the end frame of the container may be flipped in a folding position folded on the bottom frame and an opening position in a vertical direction. When the end frame of the container is in the opening position, the operator inserts the bolt outwards from the inside of the fixed hinge into the corresponding holes or notches of the movable hinge and the fixed hinge, so that the movable hinge is fixed on the fixed hinge, and thus the end frame cannot be flipped from the opening position to the folding position under the action of external force. When the end frame of the container needs to be flipped from the opening position to the folding position, the operator needs to pull out the bolt in advance.

Moreover, in current foldable containers, a pivot shaft (e.g., the flipping pin shaft) of the hinge device is located away from the end frame of the container, such that the end frame of the container may stand in the opening position to facilitate the operator to operate the bolt without requiring other operators to hold the end frame. In some cases, however, the operator may forget to lock the bolt to a correct position, and it is also difficult for the operator to find it because the bolt is in the external contour plane of the box in both the opened and locked states. If the bolt of the hinge device is not locked to the correct position, foldable container there will be a greater safety hazard to the on-site personnel, the box, the cargo and the equipment operating the box when the operator operates the foldable container.

In the related technologies, the hinge device still has the following shortcomings: (1) in order to ensure the tight locking between the movable hinge and the fixed hinge, the gap between the locking block and the fixed hinge as well as the movable hinge is small when locking, and in order to ensure that the locking block may be operated smoothly when it is flipped along with a bracket pin shaft, the locking block needs to be movably clamped in a bracket, and the locking block is able to be flipped around itself while it is flipped around the bracket pin shaft; however, in order to move a locking assembly to a releasing position, the locking assembly is provided with a pull ring, which is directly pivoted on the locking block; when the pull ring is manually pulled up for operation, the locking block will not be able to be flipped around itself, and there will be a situation in which the locking block is jammed, and then the opening operation of the locking block will be greatly affected, or even impossible to be operated; (2) after moving to the releasing position, the locking assembly will remain in the releasing position and will not return; the operator needs to unlock the locked state of the locking assembly in the releasing position after folding or opening operation of the end frame, so that the locking assembly may move to the locking position under the action of self-weight; a mechanism for holding the locking assembly in the releasing position complicates the structure of the whole hinge device, which is not convenient for production and use; (3) the bracket includes a side plate and an end plate connected to the side plate, and the contact surfaces of the side plate and the end plate with the locking block are arc-shaped surfaces protruding outwards, thus realizing the movable clamping between the locking block and the bracket, which is equivalent to that the receiving groove for the locking block is processed by both the bracket and the end plate, with larger processing cost, difficulty, and more processes.

Therefore, there is a need to provide a hinge device and a foldable container having same to at least partially solve the above-mentioned problems.

### SUMMARY

A series of simplified concepts are introduced into the portion of the SUMMARY, which would be further illustrated in the portion of the DETAILED DESCRIPTION. The portion of the SUMMARY of the present disclosure is not intended to define the key features and essential technical features of the claimed technical solution, let alone determining the protection scope thereof.

To at least partially solve the problem, a first aspect of the present disclosure provides a hinge device for a foldable container, comprising:
a fixed hinge comprising a pair of wall panels disposed along a vertical direction;
a movable hinge disposed between the pair of wall panels and pivotally connected to the fixed hinge between a horizontal position and a vertical position; and
a locking assembly pivotally connected to the fixed hinge between a locking position and a releasing position, the locking assembly comprising:
a bracket comprising a pair of side plates disposed along the vertical direction, a connecting member connecting the pair of side plates and a blocking member disposed along a transverse direction, the blocking member being disposed to at least one of the pair of side plates, the pair of side plates being disposed between the pair of wall panels, and the movable hinge being disposed between the pair of side plates;
a bracket pin shaft disposed to a bottom of the bracket close to an outer end of the bracket to pivotally connect the bracket to the fixed hinge; and
a locking block movably clamped in the bracket;
wherein the locking block in the locking position is pushed by the movable hinge during pivoting of the movable hinge from the horizontal position to the vertical position, so that the movable hinge in the vertical position is at least partially located below the locking block in the locking position;
the movement of the movable hinge is blocked by the locking block during pivoting of the movable hinge from the vertical position to the horizontal position;
the hinge device further comprises a flipping pedal pivotally connected to the bracket and/or the fixed hinge, and the flipping pedal is configured to be pivotable to mate with the blocking member to drive the locking assembly to pivot from the locking position to the releasing position to allow the movable hinge to pivot towards the horizontal position.

Optionally, the flipping pedal comprises an operating portion and a mating portion connected to each other, the mating portion is located between the pair of side plates, and the operating portion is located at the outer end of the bracket;
the operating portion and the mating portion are respectively located on both sides of the bracket pin shaft, and a connection position of the operating portion and the mating portion is provided with a connection hole for connecting the bracket pin shaft;
the flipping pedal is pivotable around an axis of the bracket pin shaft between a receiving position and a flipping position;
in the receiving position, the mating portion is not in contact with the blocking member, and the operating portion does not exceed a vertical plane of an outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the bracket pin shaft towards the direction of the outer end of the bracket.

Optionally, the fixed hinge further comprises a bottom corner piece disposed to a lower portion of the pair of side plates;
in the receiving position, the mating portion abuts against a top surface of the bottom corner piece, and the operating portion does not exceed an outer end surface of the bottom corner piece; and
in the flipping position, the mating portion abuts against the blocking member, and the bracket is driven to rotate synchronically when the flipping pedal is rotated around the axis of the bracket pin shaft towards the direction of the outer end surface of the bottom corner piece.

Optionally, the flipping pedal is configured such that a center of gravity when in the flipping position is located on a side of a vertical plane towards the mating portion, in which vertical plane the axis of the bracket pin shaft is located; and/or
the locking assembly further comprises an elastic member connected between the mating portion and the bottom corner piece such that the flipping pedal is held in the receiving position.

Optionally, the flipping pedal is configured such that a center of gravity when in the receiving position is located on a side of a vertical plane towards the operating portion, in which vertical plane the axis of the bracket pin shaft is located.

Optionally, the flipping pedal comprises an operating portion and a mating portion connected to each other, the mating portion is located between the pair of side plates, and the operating portion is located at the outer end of the bracket;
the flipping pedal is pivotally connected to the bracket via a first flipping pedal rotating shaft, the operating portion and the mating portion are respectively located on both sides of the first flipping pedal rotating shaft, and a connection position of the operating portion and the mating portion is provided with a connection hole for connecting the first flipping pedal rotating shaft;
the flipping pedal is pivotable around an axis of the first flipping pedal rotating shaft between a receiving position and a flipping position;
in the receiving position, the mating portion is not in contact with the blocking member, and the operating portion does not exceed a vertical plane of an outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the first flipping pedal rotating shaft towards the direction of the outer end of the bracket.

Optionally, the flipping pedal comprises an operating portion and a mating portion connected to each other, the mating portion is located between the pair of wall panels, and the operating portion is located at an outer end of the fixed hinge;
the flipping pedal is pivotally connected to the fixed hinge via a second flipping pedal rotating shaft, the operating portion and the mating portion are respectively located on both sides of the second flipping pedal rotating shaft, and a connection position of the operating portion and the mating portion is provided with a connection hole for connecting the second flipping pedal rotating shaft;
the flipping pedal is pivotable around an axis of the second flipping pedal rotating shaft between a receiving position and a flipping position;
in the receiving position, the mating portion is not in contact with the blocking member, and the operating portion does not exceed a vertical plane of the outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the second flipping pedal rotating shaft towards the direction of the outer end of the fixed hinge.

Optionally, the pair of side plates are each provided with a receiving groove with an opening facing upward, and the locking block is movably clamped in the receiving groove.

Optionally, an upper area of an inner surface of the receiving groove is configured as arc-shaped surfaces protruding outward, and the arc-shaped surfaces are disposed opposite to each other at both sides of the locking block and are in contact with the locking block, such that the locking block is capable of flipping around itself while it is flipped around the bracket pin shaft.

Optionally, a lower area of an inner surface of the receiving groove close to an outer end is configured as a circular arc-shaped transition surface, an avoidance notch is provided at a position of the locking block corresponding to the transition surface, and the portion of the locking block between the pair of side plates is not provided with the avoidance notch.

Optionally, an outer end surface of the locking block is provided with a limiting member, and the limiting member is disposed below the connecting member and is capable of abutting against the connecting member, so as to limit the locking block from upwardly disengaging from the receiving groove.

Optionally, the movable hinge is provided with a protruding portion having a supporting surface, during pivoting of the movable hinge from the horizontal position to the vertical position, the protruding portion is capable of abutting against the locking block and pushing the locking block away from the locking position, and the supporting surface is disposed below the locking block and abuts against the locking block when the movable hinge is at the vertical position.

Optionally, an outer end of the fixed hinge is provided with a locking surface, and the locking block is clamped between the locking surface and the supporting surface along the vertical direction when the movable hinge is at the vertical position.

Optionally, the fixed hinge further comprises a clamping block disposed at an outer end of the pair of wall panels along the transverse direction, and the locking surface is a lower surface of the clamping block.

A second aspect of the present disclosure provides a foldable container, comprising a bottom frame and an end frame, wherein the hinge device of the first aspect of the present disclosure is disposed between the bottom frame and the end frame, the movable hinge is fixedly connected to the end frame, and the fixed hinge is fixedly connected to the bottom frame.

The present disclosure provides a hinge device and a foldable container having the hinge device. According to the hinge device of the present disclosure, the movable hinge may be locked in the vertical position when the movable hinge is pivoted to the vertical position by providing the locking assembly, which is easy to operate, and reduces the damage to the hinge device the maintenance cost of the product. Moreover, by providing the flipping pedal pivotally connected to the fixed hinge, the flipping pedal may be operated from the outer end of the fixed hinge to move the locking assembly from the locking position to the releasing position, thereby enabling to move the movable hinge from the vertical position to the horizontal position. The present disclosure does not need to be additionally provided with a mechanism to hold the locking assembly in the releasing position. the operator may simultaneously operate the movable hinge to move from the vertical position to the horizontal position while moving the locking assembly from the locking position to the releasing position. The device is simple in structure and easy to produce and use. Especially when there is only one operator, the operator may step on the flipping pedal with his foot to hold the locking assembly in the releasing position, and then turn over the end frame with his hand to realize the movement of the movable hinge between the vertical position and the horizontal position, which may effectively save the labor.

### BRIEF DESCRIPTION OF THE DRAWINGS

The following drawings of the embodiments of the present disclosure are hereby incorporated as part of the present disclosure for the understanding of the present disclosure. The embodiments of the disclosure are illustrated and described in the drawings in order to explain the principles of the present disclosure. In the drawings:
FIG. 1 is a perspective schematic structural view of a hinge device for a foldable container according to a first optional embodiment of the present disclosure, wherein a movable hinge is in a vertical position, and a locking assembly is in a locking position;
FIG. 2 is a perspective schematic structural view of the hinge device in FIG. 1, wherein the movable hinge is in a horizontal position, and the locking assembly is in the locking position;
FIG. 3 is another perspective schematic structural view of the hinge device in FIG. 1, wherein the movable hinge is in a certain position between the vertical position and the horizontal position, and the locking assembly is in a releasing position;
FIG. 4 is a perspective schematic structural view of a fixed hinge of the hinge device in FIG. 1;
FIG. 5 is a perspective schematic structural view of a movable hinge of the hinge device in FIG. 1;
FIG. 6 is a perspective schematic structural view of the locking assembly in FIG. 1;
FIG. 7 is a perspective schematic structural view of a locking block of the locking assembly in FIG. 6;
FIG. 8 is a perspective schematic structural view of a flipping pedal in FIG. 1;
FIG. 9 is a schematic view of a state of the flipping pedal during use in FIG. 1, wherein the flipping pedal is in a receiving position;
FIG. 10 is a schematic view of a second state of the flipping pedal during use in FIG. 1, wherein the flipping pedal is in a flipping position and the locking assembly is in the locking position, and the position of the center of gravity of the flipping pedal is at G1;
FIG. 11 is a schematic view of a second state of the flipping pedal during use in FIG. 1, wherein the flipping pedal is in a flipping position and the locking assembly is in the locking position, and the position of the center of gravity of the flipping pedal is at G2;
FIG. 12 is a schematic view of a third state of the flipping pedal during use in FIG. 1, wherein the flipping pedal is in the flipping position and the locking assembly is in the releasing position;
FIG. 13 is a schematic structural view of a hinge device for a foldable container according to a third optional embodiment of the present disclosure, wherein a flipping pedal is pivotally connected to a bracket by a first flipping pedal rotating shaft;
FIG. 14 is a schematic structural view of a hinge device for a foldable container according to a fourth optional embodiment of the present disclosure, wherein a flipping pedal is pivotally connected to a fixed hinge by a second flipping pedal rotating shaft;
FIG. 15 is a schematic structural view of a hinge device for a foldable container according to still another optional embodiment of the present disclosure, wherein the flipping pedal is located at the receiving position; and
FIG. 16 is a perspective schematic view of a foldable container according to an optional embodiment of the present disclosure, wherein an end frame is in an opening position.

**EXPLANATION OF REFERENCE NUMBERALS**

| | | | |
|---|---|---|---|
| 100: | Hinge device | 110: | Fixed hinge |
| 111: | Outer wall panel | 112: | Clamping block |
| 113: | Locking surface | 114: | Inner wall panel |
| 115: | Outer pin shaft hole | 116: | Bottom corner piece |
| 117: | Hanging corner piece | 118: | Wall panel pin shaft hole |
| 120: | Movable hinge | 121: | Protruding portion |
| 122: | Supporting surface | 123: | Inner pin shaft hole |
| 124: | Abutment surface | 130: | Pivot shaft |
| 140: | Locking assembly | 141: | Bracket |
| 143: | Locking block | 144: | Bracket pin shaft |
| 145: | Outer side plate | 146: | Connecting member |
| 147: | Receiving groove | 148: | Arc-shaped surface |
| 149: | Transition surface | 151: | Limiting member |
| 152: | Avoidance notch | 153: | Side plate pin shaft hole |
| 154: | Inner side plate | 155: | Blocking member |
| 155a: | Blocking surface | 160: | Flipping pedal |
| 161: | Operating portion | 162: | Mating portion |
| 162a: | First mating surface | 162b: | Second mating surface |
| 163: | Connection hole | 260: | Flipping pedal |
| 261: | Operating portion | 262: | Mating portion |
| 360: | Flipping pedal | 361: | Operating portion |
| 362: | Mating portion | 364: | First flipping pedal rotating shaft |
| 460: | Flipping pedal | 461: | Operating portion |
| 462: | Mating portion | 441: | Stopper |
| 464: | Second flipping pedal rotating shaft | | |
| F1: | Outer end surface of bottom corner piece | | |
| F2: | Top surface of bottom corner piece | D1: | Vertical direction |
| D2: | Transverse direction | | |

### DETAILED DESCRIPTION

In the following description, numerous specific details are set forth in order to provide a more thorough understanding of the present disclosure. However, it is obvious to those skilled in the art that the embodiments of the present disclosure may be implemented without one or more of these details. Some technical features well-known in this art are not described in other examples in order to avoid confusion with the embodiments of the present disclosure.

In order to thoroughly understand the embodiments of the present disclosure, detailed structures will be set forth in the following description. Obviously, the implementation of the embodiments of the present disclosure is not limited to the specific details familiar to those skilled in the art. The preferred embodiments of the present disclosure are illustrated in detail as below. However, the present disclosure may further have other embodiments in addition to these detail descriptions, which should not be construed as being limited to the embodiments set forth herein.

It is to be understood that the terminology used herein is for the purpose of describing particular embodiments only and is not intended to limit the present disclosure. The singular forms "a," "an," and "the" are intended to include the plural forms as well, unless the context clearly indicates otherwise. The terms "comprising" and/or "including" as used herein specify the presence of stated features, wholes, steps, operations, elements, and/or components, but do not exclude the presence or addition of one or more other features, wholes, steps, operations, elements, components, and/or combinations thereof. The terms "up", "down", "front", "back", "left", "right" and similar expressions as used herein are for illustrative purposes only and are not restrictive.

Ordinals such as "first" and "second" recited in the present disclosure are merely identifications and do not have any other meaning, such as a specific order and the like. Moreover, for example, the term "first component" itself does not imply the presence of "second component", and the term "second component" itself does not imply the presence of "first component."

The specific embodiments of the present disclosure will be explained in further details below with reference to the accompanying drawings, which show representative embodiments of the present disclosure and do not limit the present disclosure.

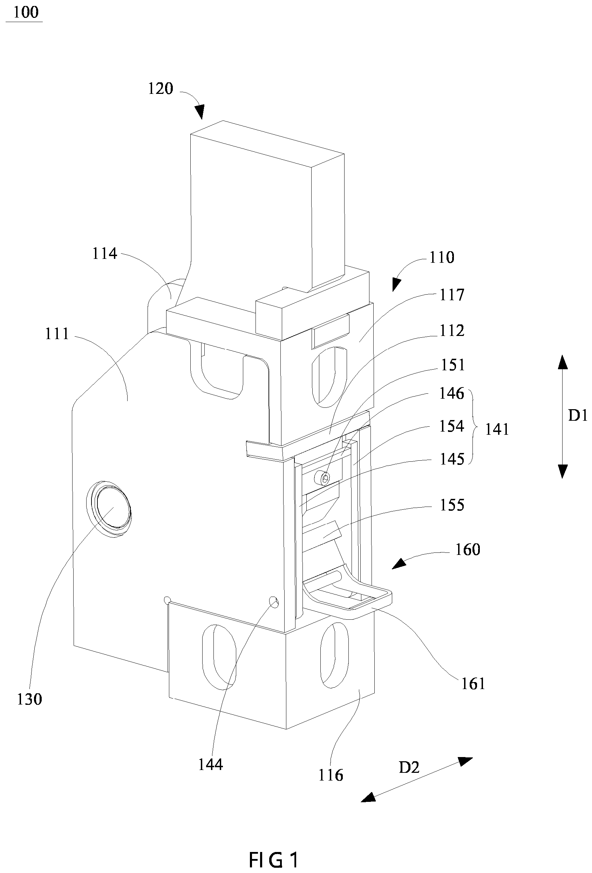

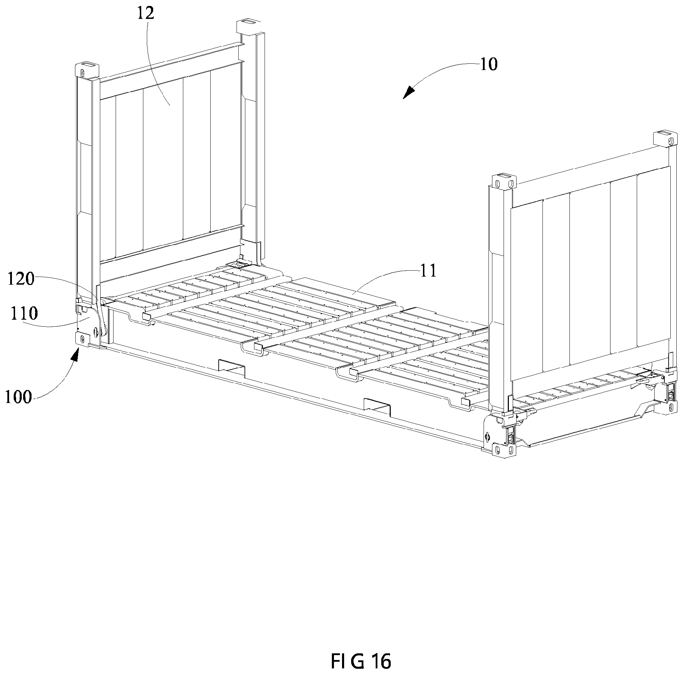

The present disclosure provides a hinge device 100 and a foldable container 10 having the hinge device 100. Referring to FIG. 16, the foldable container 10 mainly includes a bottom frame 11 disposed along a horizontal direction and an end frame 12 disposed at both ends of the bottom frame 11. The end frame 12 can be moved between a folding position folded on the bottom frame 11 and an opening position perpendicular to the bottom frame 11. The hinge device 100 is used to pivotally connect the end frame 12 to the bottom frame 11. The bottom frame 11 is substantially configured as a rectangular frame structure. The hinge device 100 is disposed at both sides of the ends of the bottom frame 11 and at both ends of the end frame 12. In order to facilitate the understanding of the solution, the structure of the hinge device 100 is first described in detail in combination with FIGS. 1 to 14.

As shown in FIGS. 1 to 14, the hinge device 100 mainly includes a fixed hinge 110, a movable hinge 120, a flipping pedal 160, and a locking assembly 140. The fixed hinge 110 is used for fixedly connecting with the bottom frame 11, and the movable hinge 120 is used for fixedly connecting with the end frame 12.

The fixed hinge 110 includes a pair of wall panels disposed along a vertical direction D1. The movable hinge 120 is disposed between the pair of wall panels of the fixed hinge 110. The movable hinge 120 is connected to the fixed hinge 110 and may be pivoted between a horizontal and vertical positions relative to the fixed hinge 110.

Specifically, as shown in FIGS. 1 to 3, the fixed hinge 110 includes an outer wall panel 111 and an inner wall panel 114 arranged opposite to the outer wall panel 111. The outer wall panel 111 and the inner wall panel 114 are disposed along the vertical direction D1 and parallel to each other. The movable hinge 120 is disposed between the outer wall panel 111 and the inner wall panel 114.

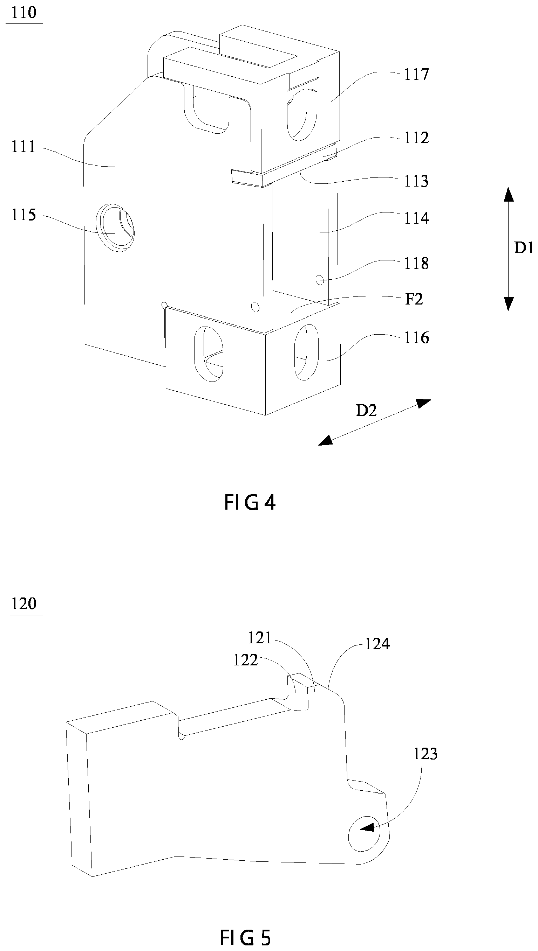

The fixed hinge 110 is pivotally connected to the movable hinge 120 by a pivot shaft 130 such that the movable hinge 120 can be moved between the horizontal and vertical positions. The pivot shaft 130 may be substantially configured as a circular columnar structure. As shown in FIGS. 4 and 5, the movable hinge 120 may be provided with an inner pin shaft hole 123, and the outer wall panel 111 and the inner wall panel 114 may each be provided with an outer pin shaft hole 115. The pivot shaft 130 extends through the inner pin shaft hole 123 and the outer pin shaft hole 115 to pivotally connect the movable hinge 120 to the fixed hinge 110. In this embodiment, one end of the movable hinge 120 is arranged at the inner sides of the outer wall panel 111 and the inner wall panel 114, and the other end of the movable hinge 120 extends beyond the outer wall panel 111 and the inner wall panel 114 for connection with the end frame 12.

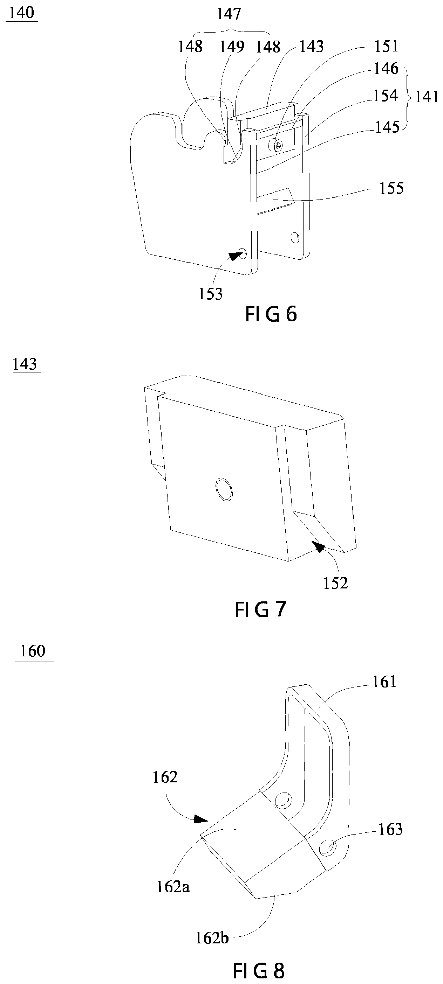

The locking assembly 140 can be pivotally connected to the fixed hinge 110 between a locking position of locking the movable hinge 120 (see FIG. 1) and a releasing position of releasing the movable hinge 120. Specifically, referring to FIGS. 6 to 8, the locking assembly 140 mainly includes a bracket 141, a locking block 143, and a bracket pin shaft 144. The bracket 141 is pivotally connected to the fixed hinge 110, and includes an outer side plate 145 and an inner side plate 154 arranged along the vertical direction D1, a connecting member 146 connecting the outer side plate 145 and the inner side plate 154, and a blocking member 155 arranged along a transverse direction D2.

Referring back to FIGS. 1 to 3, the outer side plate 145 of the bracket 141 is disposed between the outer wall panel 111 and the movable hinge 120, and the inner side plate 154 is disposed between the inner wall panel 114 and the movable hinge 120. The bracket pin shaft 144 is disposed at the bottom of an outer end of the bracket 141 along the transverse direction D2, and pivotally connects the bracket 141 to the outer wall panel 111 and the inner wall panel 114 of the fixed hinge 110. The blocking member 155 is disposed to at least one of the outer side plate 145 and the inner side plate 154.

In conjunction with FIGS. 1 to 3, the locking block 143 is movably clamped in the bracket 141. The flipping pedal 160 of the hinge device 100 may be pivotally connected to at least one of the bracket 141 and the fixed hinge 110, so that the flipping pedal 160 may be pivoted relative to the bracket 141. The flipping pedal 160 is configured to be pivotable to mate with the blocking member 155 to drive the locking assembly 140 to pivot from the locking position to the releasing position, thereby allowing the movable hinge 120 to pivot towards the horizontal position.

During pivoting of the movable hinge 120 from the horizontal position to the vertical position, the locking block 143 in the locking position may be pushed by the movable hinge 120, so that the movable hinge 120 in the vertical position is at least partially located below the locking block 143 in the locking position, thus realizing the movable hinge 120 to be clamped in the vertical position (the movement of the movable hinge 120 from the vertical position to the horizontal position is blocked by the locking block 143 in the locking position).

When it is necessary to pivot the movable hinge 120 from the vertical position to the horizontal position, the flipping pedal 160 is operated to pivot relative to the bracket 141 until the flipping pedal 160 mates with the blocking member 155 on the bracket 141. Then the flipping pedal 160 is further operated to pivot such that the pivoting thereof drives the bracket 141 to pivot around an axis of the bracket pin shaft 144, thereby causing the position of the locking block 143 to change, so that the locking block 143 may be separated from the movable hinge 120. It is then possible to operate the movable hinge 120 to pivot from the vertical position to the horizontal position.

It should be noted that the "horizontal position" of the movable hinge 120 herein corresponds to the "folding position" of the end frame 12, and the "vertical position" of the movable hinge 120 corresponds to the "opening position" of the end frame 12. That is, when the movable hinge 120 is in the horizontal position, it is disposed substantially along the horizontal direction, and when the movable hinge 120 is in the vertical position, it is disposed substantially along the vertical direction.

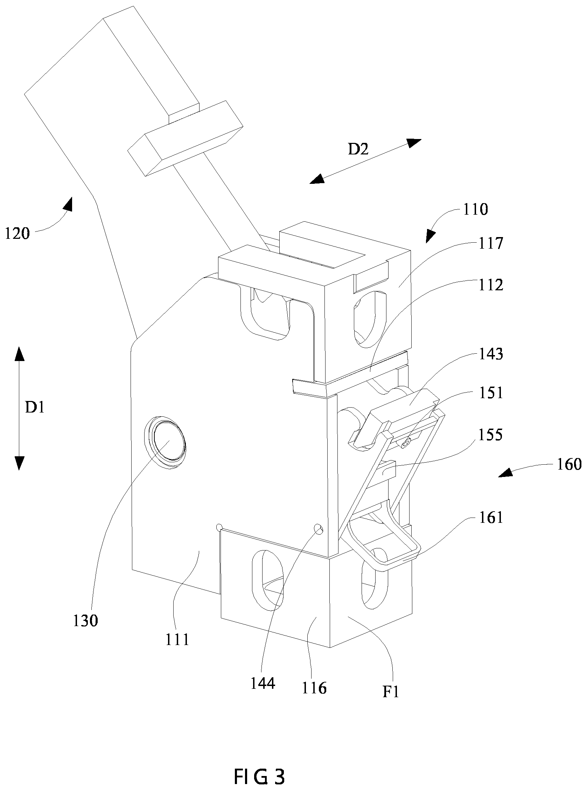

When the locking assembly 140 is in the locking position (see FIG. 1), the position of the movable hinge 120 is locked such that the end frame 12 is locked in the opening position. When the locking assembly 140 is in the releasing position (see FIG. 3), the position locking of the movable hinge 120 may be released, and it is possible to pivot the end frame 12 from the opening position to the folding position.

The hinge device 100 according to the present disclosure is simple in structure and easy to produce and use. An operator may operate the flipping pedal 160 by stepping on the flipping pedal 160 with his foot, thereby moving the locking assembly 140 from the locking position towards the releasing position, while manually flipping the end frame 12 to move the movable hinge 120 from the vertical position to the horizontal position, and vice versa. In this way, when there is only one operator, the operator may complete the folding (the end frame 12 being pivoted to the folding position) and assembly (the end frame 12 being pivoted to the opening position) operations of the foldable container 10 alone. It is convenient to use and can save labor.

Referring to FIG. 5, the movable hinge 120 is provided with a protruding portion 121. The protruding portion 121 is provided at an outer end of the movable hinge 120, and may include an upward supporting surface 122. It should be noted that the directional terms "outer" and "upward" as used herein are determined with reference to the movable hinge 120 in the vertical position. During pivoting of the movable hinge 120 from the horizontal position to the vertical position, the protruding portion 121 may abut against the locking block 143 and exert a thrust on the locking block 143, causing the locking block 143 to move outward and away from the locking position. When the movable hinge 120 is in the vertical position, the supporting surface 122 is located under the locking block 143 and may abut against the locking block 143, such that the locking block 143 may be clamped along the vertical direction between the supporting surface 122 of the protruding portion 121 and the fixed hinge 110.

The protruding portion 121 may also be provided with an abutment surface 124. The supporting surface 122 is inclined relative to the abutment surface 124 (see FIG. 5). In this embodiment, when the movable hinge 120 is in the vertical position, the abutment surface 124 is inclined upward towards an outer end of the hinge device 100. During pivoting of the movable hinge 120 from the horizontal position to the vertical position, the abutment surface 124 may abut against the locking block 143 and push the locking block 143 away from the locking position.

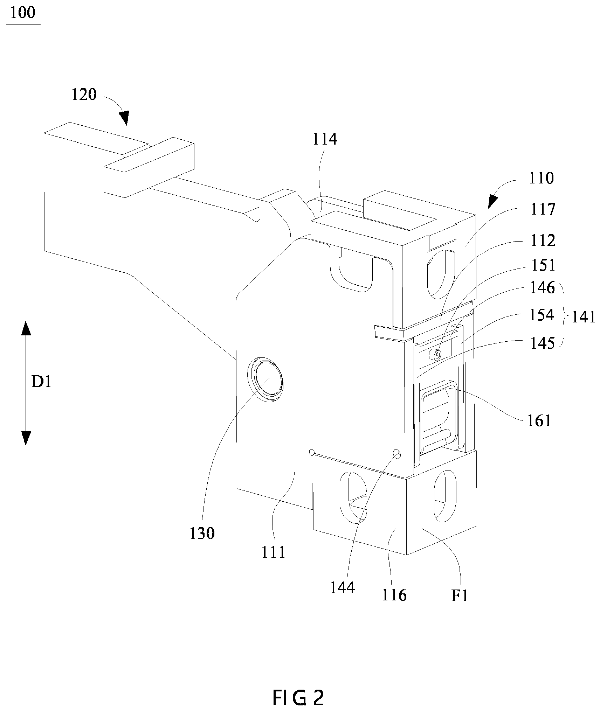

Referring back to FIGS. 1 to 3, the fixed hinge 110 may also include a bottom corner piece 116 disposed at a lower portion of the outer wall panel 111 and a hanging corner piece 117 disposed at an upper portion of the outer wall panel 111. The bottom corner piece 116 and the hanging corner piece 117 are both disposed at the outer ends of the outer wall panel 111 and the inner wall panel 114. Referring to FIG. 2, an outer end surface F1 of the bottom corner piece 116 exceeds the outer end surfaces of the outer wall panel 111 and the inner wall panel 114 (the outer end surfaces of the outer wall panel 111 and the inner wall panel 114 are the end surfaces away from the movable hinge 120). The fixed hinge 110 also includes a clamping block 112. The clamping block 112 is disposed at the outer ends of the outer wall panel 111 and the inner wall panel 114 along the transverse direction D2 and is mounted to the outer wall panel 111 and the inner wall panel 114. The clamping block 112 is provided with a locking surface 113. The locking surface 113 is a lower surface of the clamping block 112. When the movable hinge 120 is in the vertical position, the locking block 143 may be clamped along the vertical direction between the locking surface 113 and the supporting surface 122.

In this embodiment, the connecting member 146 connects the outer side plate 145 and the inner side plate 154 as a whole. The blocking member 155 is supported and connected between the outer side plate 145 and the inner side plate 154. As shown in FIG. 6, the connecting member 146 of the bracket 141 is disposed at an outer end of the locking block 143 along the transverse direction D2 and is disposed above the bracket pin shaft 144. The blocking member 155 is located above the bracket pin shaft 144 and below the connecting member 146. The outer side plate 145 and the inner side plate 154 are pivotally mounted to the outer wall panel 111 and inner wall panel 114 through the bracket pin shaft 144 (see FIGS. 1 to 3). The bottoms of the outer side plate 145 and the inner side plate 154 are each provided with a side plate pin shaft hole 153, and the outer wall panel 111 and the inner wall panel 114 of the fixed hinge 110 are each correspondingly provided with a wall panel pin shaft hole 118 (see FIG. 4). The bracket pin shaft 144 extends through the side plate pin shaft hole 153 and the wall panel pin shaft hole 118 to pivotally connect the bracket 141 to the fixed hinge 110.

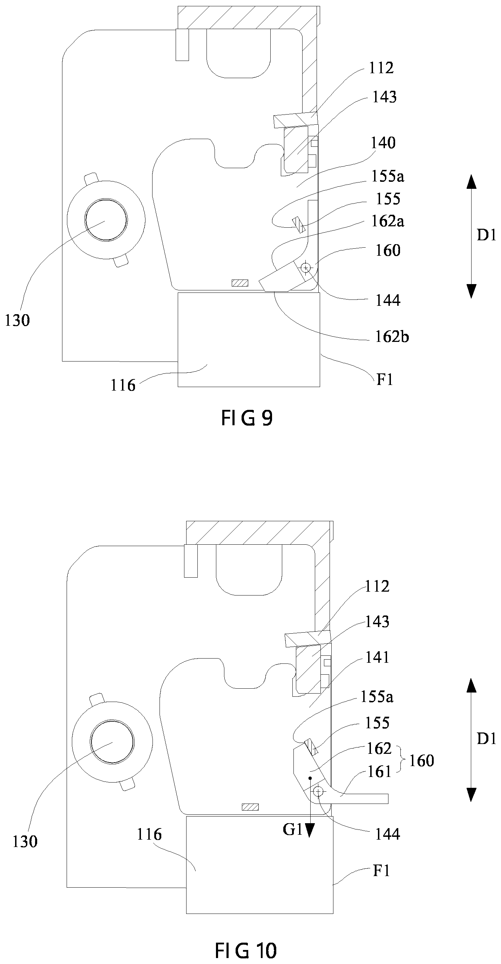

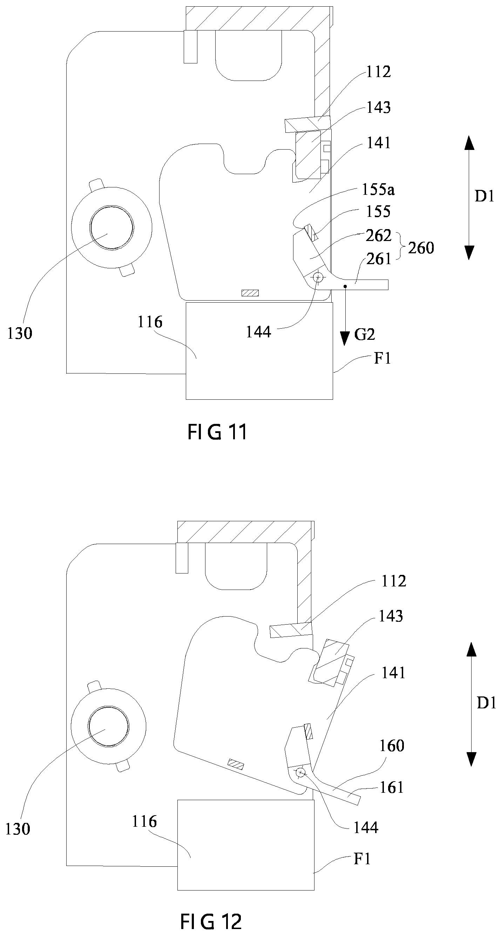

Optionally, in this embodiment, the bracket pin shaft 144 is disposed at the outer ends (the ends away from the movable hinge 120) of the outer wall panel 111 and the inner wall panel 114. The pivot shaft 130 is disposed at an inner end of the outer wall panel 111. The position of the center of gravity of the locking assembly 140 is located on a side of a vertical plane close to the pivot shaft 130, in which vertical plane the axis of the bracket pin shaft 144 is located (see FIGS. 10 and 12). Thus, the locking assembly 140 may automatically return to the locking position under the action of its own gravity.

Continuing with reference to FIG. 6, the locking block 143 is movably clamped to the outer side plate 145 and the inner side plate 154. Specifically, the outer side plate 145 and the inner side plate 154 are each provided with a receiving groove 147 with an opening facing upward. The locking block 143 is movably clamped in the receiving groove 147. The connecting member 146 is disposed at the outer end of the locking block 143. In this embodiment, the receiving groove 147 is provided entirely on the outer side plate 145 and the inner side plate 154, such that the processing of the receiving groove 147 may be realized only by cutting out the material through ring-cutting, with simpler processing, lower cost and better precision control. An upper area of an inner surface of the receiving groove 147 is configured as arc-shaped surfaces 148 protruding outward. The arc-shaped surfaces 148 are disposed opposite to each other at both sides of the locking block 143 and are in contact with the locking block 143. As such, it is possible to reduce the contact area between the receiving groove 147 and the locking block 143, and to ensure that the locking block 143 may be flipped around itself while it is flipped around the bracket pin shaft 144. Consequently, it is possible to achieve the conversion operation of the locking assembly 140 between the releasing position and the locking position.

In conjunction with FIG. 6 and FIG. 7, an lower area of the inner surface of the receiving groove 147 is configured as a circular arc-shaped transition surface 149. The transition surface 149 may be disposed on a side close to the outer ends of the outer side plate 145 and the inner side plate 154. An avoidance notch 152 is provided at a position of the locking block 143 corresponding to the transition surface 149. The portion of the locking block 143 between the outer side plate 145 and the inner side plate 154 is not provided with the avoidance notch 152. Therefore, the avoidance notch 152 is provided at both sides of the outer end of the locking block 143, such that the locking block 143 may rotate with the arc-shaped surface 148 as the fulcrum in the receiving groove 147, and the outer side plate 145 and the inner side plate 154 may act as a limit to the locking block 143 in the transverse direction D2. The transition surface 149 may be a rounded or diagonal corner.

An outer end surface of the locking block 143 is provided with a limiting member 151. The limiting member 151 is disposed below the connecting member 146 and may abut against the connecting member 146, so as to limit the locking block 143 from upwardly disengaging from the receiving groove 147.

Referring to FIGS. 8 to 10, in this embodiment, the flipping pedal 160 includes an operating portion 161 and a mating portion 162 connected to each other. The mating portion 162 is located between the outer side plate 145 and the inner side plate 154, and the operating portion 161 is located at the outer end of the bracket 141. The operating portion 161 and the mating portion 162 are respectively located on both sides of the bracket pin shaft 144, and the connection position of the operation portion 161 and the mating portion 162 is provided with a connection hole 163 for connecting the bracket pin shaft 144. In other words, in this embodiment, the pivot axis of the flipping pedal 160 is the same as that of the bracket 141. The operating portion 161, the mating portion 162 and the bracket pin shaft 144 constitute a lever structure. By operating the operating portion 161, the mating portion 162 on the other side of the bracket pin shaft 144 is driven to rotate, so as to cause the mating portion 162 contact the blocking portion 155 and realize the force transfer to the blocking portion 155.

The flipping pedal 160 is pivotable around the axis of the bracket pin shaft 144 between a receiving position and a flipping position.

In the receiving position, the mating portion 162 is not in contact with the blocking member 155, and the operating portion 161 does not exceed a vertical plane of the outer end of the fixed hinge 110. At this time, the locking assembly 140 is in the locking position.

In the flipping position, the mating portion 162 abuts against the blocking member 155. The operating portion 161 exceeds the vertical plane of the outer end of the fixed hinge 110. The bracket 141 is driven to rotate synchronically when the flipping pedal 160 is rotated around the axis of the bracket pin shaft 144 towards the direction of the outer end of the bracket 141. At this time, the flipping pedal 160 will drive the locking assembly 140 to move towards the releasing position. It shall be understood that in this embodiment, the vertical plane of the outer end of the fixed hinge 110 specifically refers to a vertical plane of the fixed hinge 110 away from the end of the movable hinge 120, and the flipping pedal 160 exceeds this plane to facilitate the pedaling operation of the user.

In this embodiment, the flipping pedal 160 and the blocking member 155 are both located between a pair of side plates of the bracket 141. The operating portion 161 is connected to the mating portion 162 and forms a ring shape (see FIG. 8) to facilitate the operation of the user. In other embodiments not disclosed in this disclosure, those skilled in the art may flexibly adjust the positions, shapes and sizes of the operating portion 161, the mating portion 162 and the blocking member 155 according to actual situations. For example, the force arm on the side of the operating portion 161 (specifically the spacing between the operating portion and the bracket pin shaft 144) may be set to be larger than the spacing between the blocking member 155 and the bracket pin shaft 144, to achieve a more labor-saving and easy-to-operate effect. For example, the flipping pedal and the blocking member may also be disposed between the bracket 141 and the fixed hinge 110.

In this embodiment, the fixed hinge 110 further includes the bottom corner piece 116 disposed to the lower portions of the outer side plate 145 and the inner side plate 154 (see FIG. 4). Referring to FIG. 8, the mating portion 162 includes a first mating surface 162a for mating with the blocking member 155 and a second mating surface 162b for mating with the bottom corner piece 116. The blocking member 155 has a blocking surface 155a for contacting the first mating surface 162a.

When the flipping pedal 160 is in the receiving position, as shown in FIG. 9, at this time, the flipping pedal 160 is rotated to a state in which the mating portion 162 abuts against a top surface F2 of the bottom corner piece 116 and the operating portion 161 does not exceed the outer end surface F1 of the bottom corner piece 116 (the operating portion 161 does not exceed the vertical plane of the outer end of the fixed hinge 110). Specifically, at this time, the whole flipping pedal 160 is located on the inner side of the outer end surface F1 of the bottom corner piece 116, and the flipping pedal 160 is in an unused state. In other words, the flipping pedal 160 in the receiving position does not exceed the outer contour of the foldable container 10. The configuration of the flipping pedal 160 does not affect the size of the foldable container 10, while the flipping pedal 160 may be well protected.

When the flipping pedal 160 is in the flipping position, referring to FIG. 10, at this time, the mating portion 162 of the flipping pedal 160 abuts against the blocking member 155, and the operating portion 161 of the flipping pedal 160 is located outside the outer end surface F1 of the bottom corner piece 116 (the operating portion 161 exceeds the vertical plane of the outer end of the fixed hinge 110). At this time, the flipping pedal 160 is subjected to a clockwise torque with the bracket pin shaft 144 as the origin. It may be understood that by flipping the flipping pedal 160 to outside the outer end surface F1 of the bottom corner piece 116 (the position in FIG. 10), it is now easier to perform the operation of applying force to the flipping pedal 160 by hand or foot. The corresponding contact between the mating portion 162 of the flipping pedal 160 and the blocking member 155 (the contact between the first mating surface 162a and the blocking surface 155a) enables the transfer of force. Optionally, the blocking member 155 may be configured such that the blocking surface 155a abuts parallel to the first mating surface 162a when the flipping pedal 160 is in the flipping position.

In this state, continuing to operate the flipping pedal 160 to rotate around the axis of the bracket pin shaft 144 in the direction of the outer end surface F1 of the bottom corner piece 116, the flipping pedal 160 may drive the bracket 141 as a whole to rotate synchronously around the axis of the bracket pin shaft 144 in the direction of the outer end surface F1 of the bottom corner piece 116 via the blocking member 155 (see FIG. 12), thereby enabling the locking assembly 140 to be rotated to the releasing position.

In the state shown in FIG. 12, the position of the center of gravity of the locking assembly 140 is located on the side of the vertical plane close to the pivot shaft 130, in which vertical plane the axis of the bracket pin shaft 144 is located. In this way, if the user removes the external force applied to the operating portion 161 of the flipping pedal 160, the bracket 141 will, under the action of its own weight, reset to a state where the locking assembly 140 returns to the locking position and drive the flipping pedal 160 to rotate to the flipping position shown in FIG. 10. In the state shown in FIG. 10, the flipping pedal 160 is configured such that the center of gravity when in the flipping position is located on a side of the vertical plane towards the mating portion 162, in which vertical plane the axis of the bracket pin shaft 144 is located (G1 in FIG. 10 is the position of the center of gravity of the flipping pedal 160). When the flipping pedal 160 is in the flipping position shown in FIG. 10, the flipping pedal 160 will automatically return to the receiving position (the position shown in FIG. 9) due to the action of gravity. As such, it is possible to stably remain the flipping pedal 160 in the receiving position when it is not in use. In this way, when the hinge device employing such a flipping pedal 160 is applied to the foldable container 10, the flipping pedal 160 does not exceed the outer contour of the box, facilitating stacking and transportation of the foldable container 10. In fact, in this embodiment, the flipping pedal 160 is configured such that the center of gravity when in the receiving position is also located on the side of the vertical plane towards the mating portion 162, in which vertical plane the axis of the bracket pin shaft 144 is located.

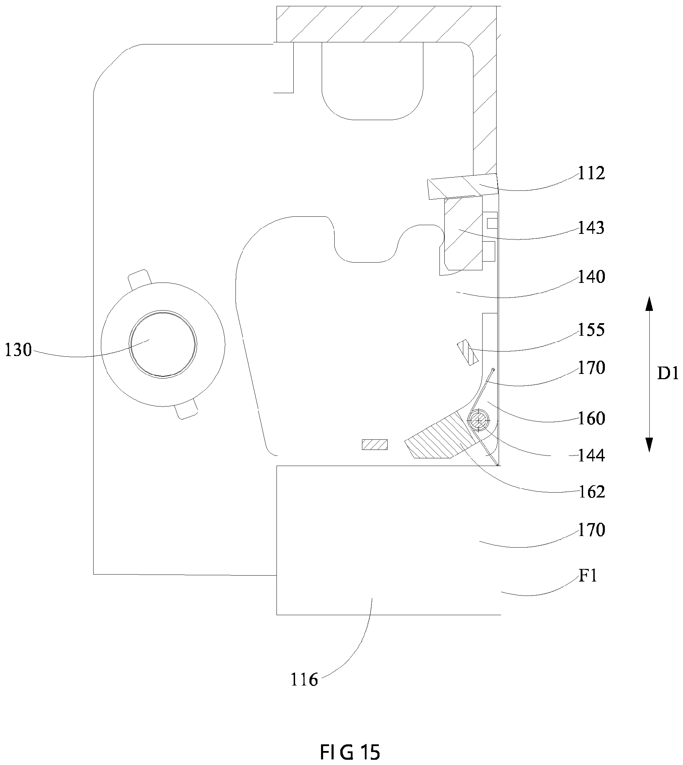

For the same purpose, in the embodiment of the present disclosure as shown in FIG. 15, it is also possible to achieve a state in which the flipping pedal 160 may be stably held in the receiving position by providing additional devices. For example, an elastic member 170 is provided between the mating portion 162 of the flipping pedal 160 and the bottom corner piece 116. When the flipping pedal 160 is not in use, the flipping pedal 160 may be returned to the receiving position and held in the receiving position under the action (elastic force) of the elastic member 170.

Referring to FIG. 11, in a second embodiment of the present disclosure, the flipping pedal 260 is configured such that the center of gravity when in the flipping position is located on the side of the vertical plane towards the operating portion 261, in which vertical plane the axis of the bracket pin shaft 144 is located (G2 in FIG. 11 is the position of the center of gravity of the flipping pedal 160). In this embodiment, the flipping pedal 260 is configured such that the center of gravity when in the receiving position is also located on the side of the vertical plane towards the operating portion 261, in which vertical plane the axis of the bracket pin shaft 144 is located. Thus, without applying any external force, the flipping pedal 260 will rotate around the axis of the bracket pin shaft 144 under the action of its own weight, so that the flipping pedal 260 is always in the flipping position shown in FIG. 11, while the locking assembly 140 is still in the locking position. It may be convenient for the user to directly operate the flipping pedal 260 to cause the mating portion 262 to mate with the blocking member 155, without the need to operate the flipping pedal 260 to be turned out in advance. It may be understood that when the hinge device employing such a flipping pedal 260 is applied to the foldable container 10, those skilled in the art may flexibly choose a fixing way to fix the flipping pedal 260 in the receiving position during stacking or transportation of the container that does not require the use of the flipping pedal 260.

The foldable container 10 of the present disclosure includes the bottom frame 11 and the end frame 12. The hinge device 100 is disposed between the bottom frame 11 and the end frame 12. The movable hinge 120 is fixedly connected to the end frame 12, and the fixed hinge 110 is fixedly connected to the bottom frame 11. The hinge device 100 according to the present disclosure and the foldable container 10 with the hinge device 100 of the present disclosure may automatically lock the movable hinge 120 in the vertical position when the movable hinge 120 is pivoted to the vertical position, which is easy to operate, and reduces the damage to the hinge device 100 and the maintenance cost of the product. Moreover, by providing the flipping pedal 160 pivotally connected to the fixed hinge 110, the flipping pedal 160 may be operated from the outer end side of the fixed hinge 110 to move the locking assembly 140 from the locking position towards the releasing position, and thereby move the movable hinge 120 from the vertical position to the horizontal position. At the same time, the flipping pedal 160 is not connected to the locking block 143, the operation of the flipping pedal 160 does not restrict the movement of the locking block 143, and the flipping pedal 160 may also be freely pivoted relative to the bracket 141.

In one embodiment of the present disclosure, it is a preferred way to sett the flipping pedal 160 to be connected to the bracket pin shaft 144 to achieve pivoting of the flipping pedal to the bracket 141, wherein the flipping pedal 160, the bracket 141 and the fixed hinge 110 are set coaxially (the bracket pin shaft 144 in this embodiment). It will be appreciated that the person skilled in the art may also realize the pivotal connection of the flipping pedal 160 to the bracket 141 in other ways.

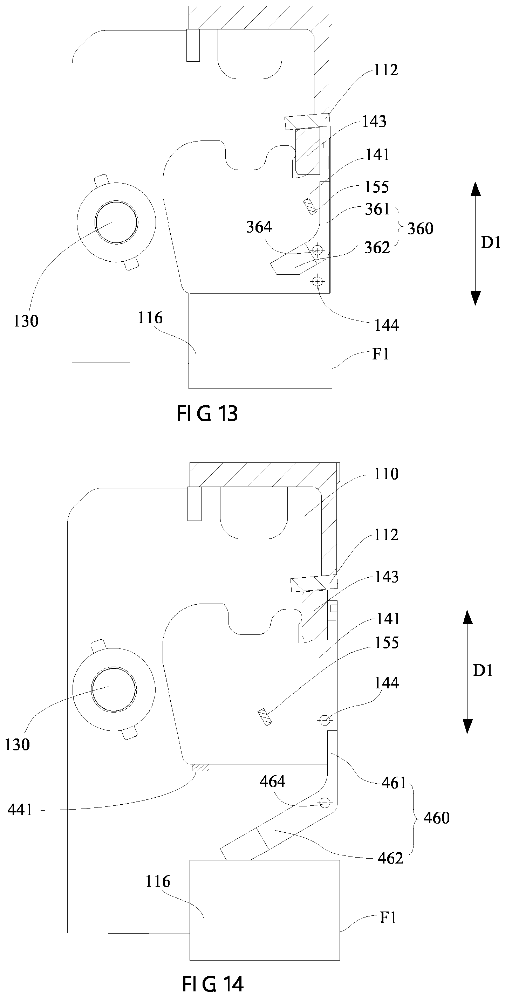

Referring to FIG. 13, in a third embodiment of the present disclosure, a first flipping pedal rotating shaft 364 may be provided between a pair of side plates of the bracket 141 such that a flipping pedal 360 may be rotated relative to the bracket 141 around an axis of the first flipping pedal rotating shaft 364. As shown in FIG. 13, the flipping pedal 360 includes an operating portion 361 and a mating portion 362 disposed at both sides of the first flipping pedal rotating shaft 364, respectively, and a connection hole of the flipping pedal 360 is connected to the first flipping pedal rotating shaft 364. The flipping pedal 360 is rotated around the axis of the first flipping pedal rotating shaft 364 between the receiving position and the flipping position.

Wherein, in the receiving position, the mating portion 362 of the flipping pedal 360 is not in contact with the blocking member 155, and the operating portion 361 does not exceed the vertical plane in which the outer end of the fixed hinge 110 is located.

Similar to the embodiments shown in FIGS. 10 and 11, in this embodiment, in the flipping position, the mating portion 362 abuts against the blocking member 155, and the operating portion 361 exceeds the vertical plane in which the outer end of the fixed hinge 110 is located. It is not difficult to understand that the rotation of the bracket 141 around the axis of the bracket pin shaft 144 may also be achieved by continuing to operate the flipping pedal 360 (towards the direction of the outer end of the fixed hinge 110) when the flipping pedal 360 is rotated to a point where the mating portion 362 abuts against (mates with) the blocking member 155, and the effect of rotating the bracket 141 relative to the fixed hinge 110 may be achieved. As shown in FIG. 13, the first flipping pedal rotating shaft 364 is disposed above the bracket pin shaft 144. It will be appreciated that in this embodiment, the position of the center of gravity of the flipping pedal 360 may also be designed with reference to the previous two embodiments. It will be appreciated that in this embodiment, the direction of the outer end of the fixed hinge 110 is also the direction of the outer end of the bracket 141.

Referring to FIG. 14, in a fourth embodiment of the present disclosure, a second flipping pedal rotating shaft 464 may be provided between a pair of wall panels of the fixed hinge 110 such that a flipping pedal 460 may be rotated relative to the fixed hinge 110 around an axis of the second flipping pedal rotating shaft 464. As shown in FIG. 14, the flipping pedal 460 includes an operating portion 461 and a mating portion 462 disposed at both sides of the second flipping pedal rotating shaft 464, respectively, and a connection hole of the flipping pedal 460 is connected to the second flipping pedal rotating shaft 464. The flipping pedal 460 is rotated around the axis of the second flipping pedal rotating shaft 464 between the receiving position and the flipping position.

Wherein, in the receiving position, the mating portion 462 of the flipping pedal 460 is not in contact with the blocking member 155, and the operating portion 461 does not exceed the vertical plane in which the outer end of the fixed hinge 110 is located.

Similar to the embodiments shown in FIGS. 10 and 11, in this embodiment, in the flipping position, the mating portion 462 abuts against the blocking member 155, and the operating portion 461 exceeds the vertical plane in which the outer end of the fixed hinge 110 is located. When the flipping pedal 460 is rotated around the axis of the second flipping pedal rotating shaft 464, the mating portion 462 of the flipping pedal 460 is also capable of mating with the blocking member 155 provided to the bracket 141, and the bracket 141 may likewise be driven to rotate around the axis of the bracket pin shaft 144 by continuing to operate the flipping pedal 460 (towards the direction of the outer end of the fixed hinge 110). Thus, the effect of rotating the bracket 141 relative to the fixed hinge 110 may be achieved.

As shown in FIG. 14, the bracket 141 is pivotally connected to the fixed hinge 110 via the bracket pin shaft 144. A stopper 441 is provided on at least one of a pair of wall panels of the fixed hinge 110. The stopper 441 is disposed below the bracket 141 and between the bracket pin shaft 144 and the pivot shaft 130 (see FIG. 14). The bracket 141 is supported by the stopper 441 together with the bracket pin shaft 144. The second flipping pedal rotating shaft 464 is parallel to and below the bracket pin shaft 144. The flipping pedal 460 is disposed between a pair of side plates of the bracket 141. In this way, neither the second flipping rotating shaft 464 nor the flipping pedal 460 obstructs the rotation of the bracket 141 when the bracket 141 is rotated around the axis of the bracket pin shaft 144. The blocking member 155 is disposed between the bracket pin shaft 144 and the second flipping pedal pivot shaft 464. It may be understood that in this embodiment, the position of the center of gravity of the flipping pedal 460 may also be designed with reference to the previous embodiment.

Unless otherwise defined, the technical and scientific terms used herein have the same meanings as commonly understood by those skilled in the technical field of the present disclosure. The terms used herein are only for the purpose of describing specific implementation, and are not intended to limit the present disclosure. Terms such as "provided" and the like appearing herein may mean that one component is directly attached to another component, or that one component is attached to another component through an intermediate component. Feature(s) described in one embodiment herein may be applied to another embodiment, alone or in combination with other feature(s), unless the feature(s) is not applicable in the other embodiment or otherwise stated.

The present disclosure has been described through the above-mentioned embodiments, but it should be understood that the above-mentioned embodiments are only for the purpose of illustration and description, and are not intended to limit the present disclosure to the scope of the described embodiments. Those skilled in the art may understand that more variations and modifications may be made according to the teachings of the present disclosure, and these variations and modifications fall within the protection scope claimed by the present disclosure.

## Claims

1. A hinge device for a foldable container, comprising:
a fixed hinge comprising a pair of wall panels disposed along a vertical direction;
a movable hinge disposed between the pair of wall panels and pivotally connected to the fixed hinge between a horizontal position and a vertical position; and
a locking assembly pivotally connected to the fixed hinge between a locking position and a releasing position, the locking assembly comprising:
a bracket comprising a pair of side plates disposed along the vertical direction, a connecting member connecting the pair of side plates and a blocking member disposed along a transverse direction, the blocking member being disposed to at least one of the pair of side plates, the pair of side plates being disposed between the pair of wall panels, and the movable hinge being disposed between the pair of side plates;
a bracket pin shaft disposed to a bottom of the bracket close to an outer end of the bracket to pivotally connect the bracket to the fixed hinge; and
a locking block movably clamped in the bracket;
wherein the locking block in the locking position is pushed by the movable hinge during pivoting of the movable hinge from the horizontal position to the vertical position, so that the movable hinge in the vertical position is at least partially located below the locking block in the locking position;
the movement of the movable hinge is blocked by the locking block during pivoting of the movable hinge from the vertical position to the horizontal position;
the hinge device further comprises a flipping pedal pivotally connected to the bracket and/or the fixed hinge, and the flipping pedal is configured to be pivotable to mate with the blocking member to drive the locking assembly to pivot from the locking position to the releasing position to allow the movable hinge to pivot towards the horizontal position.

2. The hinge device of claim 1, wherein,
the flipping pedal comprises an operating portion and a mating portion connected to each other, the mating portion is located between the pair of side plates, and the operating portion is located at the outer end of the bracket;
the operating portion and the mating portion are respectively located on both sides of the bracket pin shaft, and a connection position of the operating portion and the mating portion is provided with a connection hole for connecting the bracket pin shaft;
the flipping pedal is pivotable around an axis of the bracket pin shaft between a receiving position and a flipping position;
in the receiving position, the mating portion is not in contact with the blocking member, and the operating portion does not exceed a vertical plane of an outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the bracket pin shaft towards the direction of the outer end of the bracket.

3. The hinge device of claim 2, wherein the fixed hinge further comprises a bottom corner piece disposed to a lower portion of the pair of side plates;
in the receiving position, the mating portion abuts against a top surface of the bottom corner piece, and the operating portion does not exceed an outer end surface of the bottom corner piece; and
in the flipping position, the mating portion abuts against the blocking member, and the bracket is driven to rotate synchronically when the flipping pedal is rotated around the axis of the bracket pin shaft towards the direction of the outer end surface of the bottom corner piece.

4. The hinge device of claim 3, wherein the flipping pedal is configured such that a center of gravity when in the flipping position is located on a side of a vertical plane towards the mating portion, in which vertical plane the axis of the bracket pin shaft is located; and/or
the locking assembly further comprises an elastic member connected between the mating portion and the bottom corner piece such that the flipping pedal is held in the receiving position.

5. The hinge device of claim 2 or 3, wherein the flipping pedal is configured such that a center of gravity when in the receiving position is located on a side of a vertical plane towards the operating portion, in which vertical plane the axis of the bracket pin shaft is located.

6. The hinge device of claim 1, wherein,
the flipping pedal comprises an operating portion and a mating portion connected to each other, the mating portion is located between the pair of side plates, and the operating portion is located at the outer end of the bracket;
the flipping pedal is pivotally connected to the bracket via a first flipping pedal rotating shaft, the operating portion and the mating portion are respectively located on both sides of the first flipping pedal rotating shaft, and a connection position of the operating portion and the mating portion is provided with a connection hole for connecting the first flipping pedal rotating shaft;
the flipping pedal is pivotable around an axis of the first flipping pedal rotating shaft between a receiving position and a flipping position;
in the receiving position, the mating portion is not in contact with the blocking member, and the operating portion does not exceed a vertical plane of an outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the first flipping pedal rotating shaft towards the direction of the outer end of the bracket.

7. The hinge device of claim 1, wherein,
the flipping pedal comprises an operating portion and a mating portion connected to each other, the mating portion is located between the pair of wall panels, and the operating portion is located at an outer end of the fixed hinge;
the flipping pedal is pivotally connected to the fixed hinge via a second flipping pedal rotating shaft, the operating portion and the mating portion are respectively located on both sides of the second flipping pedal rotating shaft, and a connection position of the operating portion and the mating portion is provided with a connection hole for connecting the second flipping pedal rotating shaft;
the flipping pedal is pivotable around an axis of the second flipping pedal rotating shaft between a receiving position and a flipping position;
in the receiving position, the mating portion is not in contact with the blocking member, and the operating portion does not exceed a vertical plane of the outer end of the fixed hinge; and
in the flipping position, the mating portion abuts against the blocking member, the operating portion exceeds the vertical plane of the outer end of the fixed hinge, and the bracket is driven to rotate synchronically when the flipping pedal is rotated around the axis of the second flipping pedal rotating shaft towards the direction of the outer end of the fixed hinge.

8. The hinge device of any of claims 1 to 7, wherein the pair of side plates are each provided with a receiving groove with an opening facing upward, and the locking block is movably clamped in the receiving groove.

9. The hinge device of claim 8, wherein an upper area of an inner surface of the receiving groove is configured as arc-shaped surfaces protruding outward, and the arc-shaped surfaces are disposed opposite to each other at both sides of the locking block and are in contact with the locking block, such that the locking block is capable of flipping around itself while it is flipped around the bracket pin shaft.

10. The hinge device of claim 8 or 9, wherein a lower area of an inner surface of the receiving groove close to an outer end is configured as a circular arc-shaped transition surface, an avoidance notch is provided at a position of the locking block corresponding to the transition surface, and the portion of the locking block between the pair of side plates is not provided with the avoidance notch.

11. The hinge device of any of claims 8 to 10, wherein an outer end surface of the locking block is provided with a limiting member, and the limiting member is disposed below the connecting member and is capable of abutting against the connecting member, so as to limit the locking block from upwardly disengaging from the receiving groove.

12. The hinge device of any of claims 1 to 11, wherein the movable hinge is provided with a protruding portion having a supporting surface, during pivoting of the movable hinge from the horizontal position to the vertical position, the protruding portion is capable of abutting against the locking block and pushing the locking block away from the locking position, and the supporting surface is disposed below the locking block and abuts against the locking block when the movable hinge is in the vertical position.

13. The hinge device of claim 12, wherein an outer end of the fixed hinge is provided with a locking surface, and the locking block is clamped between the locking surface and the supporting surface along the vertical direction when the movable hinge is in the vertical position.

14. The hinge device of claim 13, wherein the fixed hinge further comprises a clamping block disposed at an outer end of the pair of wall panels along the transverse direction, and the locking surface is a lower surface of the clamping block.

15. A foldable container, comprising a bottom frame and an end frame, wherein the hinge device of any of claims 1 to 14 is disposed between the bottom frame and the end frame, the movable hinge is fixedly connected to the end frame, and the fixed hinge is fixedly connected to the bottom frame.
